(19) Europäisches Patentamt
European Patent Office
Office européen des brevets

(11) Publication number: **0 274 908**
**A2**

(12) **EUROPEAN PATENT APPLICATION**

(21) Application number: **87311463.1**

(22) Date of filing: **24.12.87**

(51) Int. Cl.[4]: **C08G 18/38** , C08G 18/50 , C08G 18/12 , C08G 18/28 , C08G 18/08

(30) Priority: **05.01.87 US 523**

(43) Date of publication of application: **20.07.88 Bulletin 88/29**

(84) Designated Contracting States: **AT BE CH DE ES FR GB GR IT LI LU NL SE**

(71) Applicant: **ICI AMERICAS INC**
**Concord Pike & New Murphy Road**
**Wilmington Delaware 19897(US)**

(72) Inventor: **Lai, Kwo-Hrong**
**20 Heritage Lane**
**Lynnfield Massachusetts 01940(US)**
Inventor: **Buschmann, Ralph Edward**
**44 Dascomb Road**
**Andover Massachusetts 01810(US)**

(74) Representative: **James, David Gomer et al**
**Imperial Chemical Industries PLC Legal Department: Patents Po Box 6 Bessemer Road**
**Welwyn Garden City Herts, AL7 1HD(GB)**

(54) **Solvent-based urethane coating compositions.**

(57) An organic solution containing a urethane having improved physical properties in addition to excellent flame retardant properties is obtained when a combination of a halogen containing diol, such as an alkoxylated tetrabromobisphenol A, or dibromoneopentyl glycol optionally with a carboxy containing diol, is incorporated in the urethane.

EP 0 274 908 A2

# SOLVENT-BASED URETHANE COATING COMPOSITIONS

## BACKGROUND OF THE INVENTION

### Field of the Invention

The present invention relates generally to solvent-based urethane-containing coating compositions having a combination of flame retardant and desirable physical properties, to urethane prepolymers suitable for use in such compositions, to a method of preparing such compositions and to the use of such compositions to impart desirable physical properties to coated substrates or to films subsequently removed from the coated substrate. More particularly, the invention relates to solvent based urethane coating compositions wherein the urethane component comprises the reaction product of (a) a prepolymer of a halogen containing diol, a polyol, an organic diisocyanate and, optionally, either a carboxy-group containing diol, a short-chained diol or a mixture thereof, (b) as a chain extender, an active hydrogen-containing compound having two active hydrogen groups cabable of reacting with the isocyanate groups, and (c) a chain terminator consisting of an active hydrogen containing compound having one active hydrogen group.

### Description of the Prior Art

Solvent-based, urethane-containing, coating compositions have been described in the literature. See, for example, U.S. Patents 3,778,408, 3,639,294 and 3,764,577. However, for a variety of applications, the physical properties, including the fire retardancy, of coatings prepared from these compositions has been less than satisfactory. The use of additives to impart fire-retardant properties to polyurethanes is commonly practiced in the industry. See, for example, U.S. Patent 3,956,233. These additives include phosphorus or halogen containing compounds and antimony oxide. These various external additives are relatively low molecular weight materials which readily migrate from the resin matrix. Especially where used in thin film coating applications, these additives are readily removed during washing or dry cleaning which reduces the fire-retardancy and alters the properties of the coated product.

It is also known that the incorporation of halogens and/or phosphorus into polymeric organic compounds will improve the fire-retardancy of the polymers, and this concept has been followed in the development of fire-retardant paints and coatings. See, for example, U.S. Patents 3,681,281 and 3,794,617.

Finally, the use of reactive intermediates to impart fire-retardant properties to polyurethanes is also known in the art. These intermediates are organic phosphorus compounds and halogenated compounds containing active hydrogens which enable them to react with organic isocyanates or isocyanate terminated prepolymers to form polyurethanes. See, in this regard, U.S. Patents 3,639,295 and 3,778,408 which disclose organic-solvent based flame-retardant polyurethane coating compositions containing the reaction product of a halogen containing polyol, a phosphorus containing polyol and an organic isocyanate.

## SUMMARY OF THE INVENTION

In accordance with the present invention organic solvent based, urethane-containing, coating compositions suitable for use in imparting a combination of flame-retardancy and improved physical properties such as increased tensile strength and color stability to a coated substrate are prepared by incorporating into a urethane polymer a halogen containing diol and optionally, a short cahin diol, a carboxy group containing diol or mixtures thereof.

## DESCRIPTION OF THE PREFERRED EMBODIMENT

As indicated above, the improved coating compositions of the present invention are based upon an isocyanate terminated urethane prepolymer comprising the reaction product of

- a halogen containing diol selected from the group consisting of containing alkoxylated halogen containing Bisphenol A diols and halogen containing neopentyl glycols,
- a polyol, and

- an organic diisocyanate.

Optionally a short chain diol, a carboxy group containing diol, or mixtures thereof can be used in addition to the halogen containing diol. Each of these components is described separately below.

The aboveisocyanate-terminated prepolymer is then further reacted (chain extended) with an active hydrogen containing chain extender in order to obtain a high molecular weight urethane polymer. This is also described below.

Finally, as is also described below, a monofunctional (single active hydrogen containing compound) amine, alcohol, oxime, or thiol is added as a chain terminator, to stop the polymerization at the desired viscosity (molecular weight).

Halogen Containing diol

As noted above, the halogen containing diols useful in this invention include Bisphenol A diols and neopentyl glycols.

The Bisphenol A diols useful in this invention have the formula

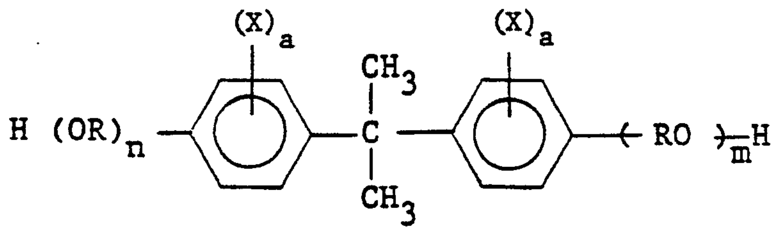

wherein X is bromine or chlorine, preferably bromine; a is an integer from 1 to 4; R is a bivalent hydrocarbon radical containing from 2 to 6 carbon atoms such as ethylene, propylene, butylene, etc. and n and m are independently integers from 1 to 10 preferably from 1 to 3. Typical examples of brominated diols having this formula include:

polyoxypropylene(2.4) 2,2-bis(4-hydroxy-3,5-dibromophenyl)propane;
polyoxypropylene(2.4) 2,2-bis(2,3,5,6-tetrabromo-4-hydroxyphenyl)propane;
polyoxypropylene(2) 2,2-bis(2,3,5,6-tetrabromo-4-hydroxyphenyl)propane;
polyoxyethylene(2.2) 2,2-bis(4-hydroxy-dibromophenyl)propane;
polyoxyethylene(8) 2,2-bis(2,3-dichloro-4-hydroxyphenyl)propane;
polyoxybutylene(2.1) 2,2-bis(2,3-dichloro-5,6-dibromo-4-hydroxyphenyl)propane; and
polyoxyethylene(2) 2,2-bis(2-chloro-4-hydroxyphenyl)propane.

Polyoxyethylene(2) 2,2-bis(3,5-dibromo-4-hydroxyphenyl)propane has been found to be especially useful in the urethanes of the present invention.

The neopentyl glycols which may be used have the formula

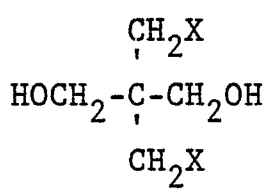

wherein X is independently bromine or chlorine, preferably bromine. Dibromo neopentyl glycol has been found to be especially useful in the urethanes of the present invention.

The prepolymer solids preferably contain from about 3 to about 30% by weight of the halogen containing diol.

Optional Diol

The optional diol in the present invention contributes to attaining the desired physical properties of modulus, elongation, tensile strength, softening point, hardness, etc., and is selected from the group consisting of short chain diols, carboxy group containing diols, or mixtures thereof.

The carboxy group containing diols render crosslinking and have the following general formula:

$$\begin{array}{c} R^1 \\ | \\ HOCH_2-C-CH_2OH \\ | \\ COOH \end{array}$$

wherein $R^1$ is hydrogen or a straight or branched chain alkyl group containing from 1 to 8 carbon atoms and including, for example, methyl, ethyl, propyl, butyl, pentyl, hexyl, heptyl and octyl. The preferred carboxy group containing diol is 2,2-dimethylol propionic acid. As explained below, when such a diol is utilized, the acidic carboxy group may or may not require neutralization prior to the chain extension of the prepolymer. This is done after preparation of the prepolymer.

The short chain diols may be selected from the group consisting of ethylene glycol, propylene-1,2-and -1,3-glycol, butylene-1,4-and -2,3-glycol, hexane-1,6-diol, octane-1,8-diol, nonane-1,9-diol, decane-1,10-diol, neopentylglycol, cyclohexanedimethanol and 2-methyl-propane-1,3-diol.

When employed, the prepolymer solids preferably contain from about 0.5 to about 50% by weight of the optional diol.

Polyol

The polyols useful in this invention have a hydroxy functionality equal to 2, and are selected from the group consisting of polyesters, polylactones, polyacetals, polycarbonates, polyolefins, polyethers, polythioethers and mixture or combined polymers thereof having a molecular weight of from about 300 to about 4200.

These polyols are known to those skilled in the art of urethane chemistry. Suitable polyesters with hydroxyl groups include, e.g., reaction product of dihydric alcohols with dibasic, carboxylic acids. Instead of free polycarboxylic acids, the corresponding polycarboxylic acid anhydrides or esters of lower alcohols or mixtures thereof may be used for producing the polyesters. The polycarboxylic acids may be aliphatic, cycloaliphatic, aromatic and/or heterocyclic and may be substituted, e.g., with halogen atoms, and/or unsaturated. The following are examples: succinic acid, adipic acid, suberic acid, azelaic acid, sebacic acid, phthalic acid, isophthalic acid, phthalic acid anhydride, tetrahydrophthalic acid anhydride, hexahydrophthalic acid anhydride, tetrachlorophthalic acid anhydride, endomethylene tetrahydrophthalic acid anhydride, glutaric acid anhydride, maleic acid, maleic acid anhydride, fumaric acid, dimeric fatty acids, such as oleic acid, dimethylterephthalate and bis-glycol terephthalate. Suitable dihydric alcohols include, e.g., ethylene glycol, propylene-1,2-and -1,3-glycol, butylene-1,4-and -2,3-glycol, hexane-1,6-diol, octane-1,8-diol, nonane-1,9-diol, decane-1,10-diol, neopentylglycol, cyclohexanedimethanol(1,4-bis-hydroxymethylcyclohexane), 2-methyl-propane-1,3-diol, diethylene glycol, triethyleneglycol, tetraethyleneglycol, polyethyleneglycols, dipropylene glycol, polypropyleneglycols, dibutyleneglycol and polybutylene glycols. The polyesters may contain a proportion of carboxyl end-groups.

The polyethers with preferably 2 hydroxyl groups which may also be used according to the invention are known and may be obtained, e.g., by the polymerization of epoxides, such as ethylene oxide, propylene oxide, butylene oxide, tetrahydrofuran, styrene oxide or epichlorohydrin, either each on its own, e.g., in the presence of $BF_3$, or by an addition of these epoxides, optionally as mixtures of successively, to starting components which contain reactive hydrogen atoms, such as alcohols or amines, e.g., water, ethylene glycol, propylene-1,3-or 1,2-glycol, 4,4′-dihydroxy-diphenylpropane or aniline.

Polyethers which are modified with vinyl polymers, e.g., the polyethers which may be obtained by polymerizing styrene or acrylonitrile in the presence of poly ethers (U.S. Patent Nos. 3,383,351; 3,304,273; 3,523,093 and 3,110,695 and German Patent No. 1,152,536) are also suitable.

Suitable polythioethers include, in particular, the condensation products obtained by condensing

thiodiglycol either on its own and/or with other glycols, dicarboxylic acids, formaldehyde, aminocarboxylic acids or aminoalcohols. The products obtained are polythio mixed ethers, polythio ether esters or polythioether ester amides, depending on the co-components.

Suitable polyacetals include, e.g., the compounds which may be prepared from glycols, such as diethyleneglycol, triethyleneglycol, 4,4'-dioxethoxy-diphenyl-dimethylmethane and hexane diol with formaldehyde. Polyacetals suitable for the process according to the invention may also be prepared by polymerizing cyclic acetals.

Suitable polycarbonates are known and may be prepared, e.g., by reacting diols, such as propane-1,3-diol, butane-1,4-diol and/or hexane-1,6-diol, diethylene glycol, triethyleneglycol or tetraethyleneglycol, polyethylene glycol, polypropylene glycol, polytetramethylene glycol, with diarylcarbonates, such as diphenylcarbonate, dialkylcarbonates such as diethyl carbonate, or cyclic carbonates such as ethylene carbonate and propylene carbonate or phosgene.

Suitable polylactones are those known in polyurethane chemistry, such as polymers of $\epsilon$-caprolacton and dihydric alcohols, such as Tone polyol from Union Carbide.

Suitable polyolefins are those known in polyurethane chemistry such as hydroxy terminated butadiene homo and copolymers, such as Poly bd® from ARCO.

The prepolymer solids preferably contain from about 10 to about 80 percent by weight of the polyol.

## Diisocyanate

Organic diisocyanates which may be used in the prepolymers and polyurethanes of this invention may be any of the aliphatic or aromatic polyisocyanates ordinarily used to prepare polyurethanes. Illustrative are

2,4-toluene diisocyanate
2,6-toluene diisocyanate
hexamethylene-1,6-diisocyanate
tetramethylene-1,4-diisocyanate
cyclohexane-1,4-diisocyanate
naphthalene-1,5-diisocyanate
diphenylmethane-2,4'-diisocyanate
diphenylmethane-4,4'-diisocyanate
xylylene diisocyanate
hexahydro xylylene diisocyanate
dicyclohexylmethane-4,4'-diisocyanate
1,4-benzene diisocyanate
3,3'-dimethoxy-4,4'-diphenyl diisocyanate
m-phenylene diisocyanate
isophorone diisocyanate
polymethylene polyphenyl isocyanate
4,4'-biphenylene diisocyanate
4-isocyanatocyclohexyl-4'-isocyanatophenyl methane
p-isocyanatomethyl phenyl isocyanate
1,4-bis-(isocyanatomethyl)cyclohexane
o-tetramethylxylene diisocyanate
p-tetramethylxylene diisocyanate
2,2,4-trimethylhexamethylene diisocyanate
2,4,4-trimethylhexamethylene diisocyanate

Mixtures of isocyanates can also be used, such as mixtures of the -2,4'-and -4,4'-isomers of diphenylmethane diisocyanate.

The amount of isocyanate used should be equal to from about 10% to about 35% by weight of the prepolymer solids. The organic diisocyanate is employed in an amount sufficient to react with the hydroxy groups of the diols and polyol so as to produce an NCO terminated prepolymer. The equivalent ratio of organic diisocyanate to hydroxy containing compound should be greater than 1.0 to 1 and is usually in the range of 6 to 1.0:1, preferably within the range of 3 to 1.2:1.

## Chain Extenders

The chain extender may be any active hydrogen-containing compound having at least two active hydrogen groups which can react with the NCO groups. Examples of suitable classes of chain extenders are primary and secondary organic amines, such as hydrogen substituted hydrazines, hydrazine reaction products, diols containing from 2 to 20 carbon atoms, alkylene diol ethers containing from 2 to 20 carbon atoms. A solvent-soluble chain extender is preferred. Organic diamines and diols are often the preferred chain extenders because they usually build the highest molecular weight without gelling the resin.

Examples of suitable well known chain extenders useful herein include water, ethylene diamine, propylene diamine, butylene diamine, hexamethylene diamine, cyclohexylene diamine, piperazine, 2-methyl piperazine, phenylene diamine, tolylene diamine, xylylene diamine, 3,3′-dinitrobenzidene, 4,4′-methylenebis-(2-chloroaniline), 3,3′-dichloro-4,4′-biphenyl diamine, 2,6-diaminopyridine, 4,4′-diamino diphenylmethane, ethylene glycol, propylene glycol, 1,4-butanediol, polyoxypropylene glycols, polyoxyethylene glycols, polyoxypropylene diamines and polyoxyethylene diamines of molecular weight of 100-2000. Also materials such as hydrazine, substituted hydrazines such as, for example, dimethyl hydrazine, 1,6-hexamethylene-bis-hydrazine, carbodihydrazide, hydrazides of discarboxylic acids and sulfonic acids such as adipic acid mono-or dihydrazide, oxalic acid dihydrazide, isophthalic acid dihydrazide, tartaric acid dihydrazide, 1,3-phenylene disulfonic acid dihydrazide, omega-amino-caproic acid dihydrazide, hydrazides made by reacting lactones with hydrazine such as gamma-hydroxylbutyric hydrazide, bis-semi-carbazide, bis-hydrazide carbonic esters of glycols such as any of the glycols mentioned above can be used as well as materials containing functional groups such as hydroxyl containing diamine, such as, for example, hydroxyethylethanolamine.

The amount of chain extender used should equal 90% to 100% (on a stoichiometric basis) of the free isocyanate content of the prepolymer.

A mono functional amine can also be used in mixture with the above-mentioned amines to limit the growth of the polymer molecular weight. Examples of suitable monoamines include butylamine, dibutylamine, ethanolamine, diethanolamine and trimethylolmethylamine.

## Chain Terminator

Preferably as chain terminators are monofunctional, active hydrogen containing compounds selected from $C_1$-$C_{12}$ straight chain or branched alcohols as well as the corresponding thiols, $C_{1-12}$ branched or straight chain amines, oximes, such as methylethyl ketoxime and $C_{1-12}$ branched or straight chain amonoalcohols such as aminoethanol. The amount of chain terminator should be equal to from about 0.1% to 10% by weight of the prepolymer.

The prepolymers of the present invention are prepared by reacting, optionally in the presence of an organic solvent, the halogen containing diol, organic diisocyanate, polyol, and, if desired, either the short chain diol, carboxy group containing diol, or mixtures thereof to form a solvent soluble prepolymer. (This prepolymer may possibly be emulsified into a dispersion.)

Preparation of the polymer can be carried out by a variety of methods. For example, in the first stage, the diisocyanate can be added to a reaction vessel containing the halogen containing diol, polyol and, if desired, the optional diol or appropriate solvent. Alternatively, the halogen containing diol, polyol and, if desired, the optional diol can be added to a reaction vessel containing the diisocyanate and, if desired, an appropriate solvent. The reaction mixture, dependent on the isocyanate and solvent employed, is generally between 20 and 150°C. The reaction is continued until the isocyanate has completely reacted with the hydroxy groups. Catalysts such as dibutyltin dilaurate, stannous octoate and the like can be employed to accelerate the reaction. In the second stage, the chain extender and organic solvent are added to the resulting isocyanate-terminated prepolymer of the first stage. Alternatively, the prepolymer may be added directly to the chain extender and organic solvent. In either case, the resulting mixture is maintained at a temperature between 20° and 100°C until a polymer of desired viscosity is obtained, generally, but not limited to, between 500 and 200,000 cps. At this point, the chain terminator is employed.

A nonreactive solvent or mixture of solvents can normally be used in the two stages of this invention. Such solvents include aliphatic or aromatic hydrocarbons, especially those having a total of 6 to 12 carbon atoms, carbonates, esters and ketones, especially those having less than 8 carbon atoms, N-alkyl pyrrolidones, especially those wherein the alkyl group contains 1 to 4 carbon atoms; dimethyl formamide (DMF) and dimethyl acetamide and $C_1$-$C_8$ alcohols. Particularly preferred are acetone, methylethylketone, dimethylformamide, ethylene carbonate, propylene carbonate, N-methylpyrrolidone, ethyl acetate, ethylene

glycol acetate, propylene glycol acetate, toluene, and xylene. DMF, toluene or xylene is especially preferred as the solvent in the first stage. Especially preferred as the solvent in the second stage, but not limited to, are DMF and, when the diisocyanate is aliphatic, or cycloali phatic, (such as tetramethylene-1,4-diisocyanate), a 10:90 to 90:10 by weight mixture of aromatic hydrocarbon:alcohol and, when the diisocyanate contains at least one aromatic ring (such as 2,4-toluene diisocyanate), a 100:0 to 0:100 by weight mixture of toluene:DMF. Additionally, other solvents may be used to adjust solution properties.

In the first stage, the total amount of solvent employed is from about 0 to about 90% based on the total weight of the prepolymer. In the second stage, the total amount (including that amount used in the first stage) of solvent employed is from about 30% to about 90% based on the total weight of the polymer solution.

As noted above, it is essential that the free carboxyl groups of the optional diol be neutralized, if the chain extension is being carried out with a diamine. This can be done either prior to or simultaneously with the addition of the prepolymer to the solvent. Thus the neutralizing agent may be added to the prepolymer itself or to the solvent before the prepolymer is added. The neutralizing agent may be a tertiary amine such as triethanolamine, triethylamine dimethylethanolamine, N-methyl morpholine or an alkaline hydroxide such as sodium hydroxide or potassium hydroxide. The amount of neutralizing agent should be sufficient to react with all of the free carboxyl groups in the prepolymer.

Elevated or reduced pressures may be employed, however, the chain extension reaction is normally conducted at approximately ambient pressure. Generally, it is desired to continue the reaction until a good yield of the desired urethane polymer is obtained.

The amount of chain extender employed should be such that when reacted with the free-NCO, the desired viscosity is reached. Preferably, 20%-100% of this compound based on the stoichiometry of the prepolymer is used.

The reaction of isocyanate terminated prepolymer and chain extender may be terminated by adding to the reaction vessel the chain extender when the desired viscosity is reached.

The resulting solutions of this invention, characteristically contain 70 to 10% by weight of the polyurethane and 30 to 90% by weight of solvent(s), are advantageously employed as coating compositions, for which purpose they may be further diluted with organic solvents. As coating compositions they may be applied to any substrate including wood, metals, glass, cloth, plastics, foam and the like, by any conventional method including brushing, dipping, flow coating, spraying, and the like. The composition may contain other conventional ingredients including organic solvents, pigments, dyes, emulsifiers, surfactants, thickeners, heat stabilizers, levelling agents, anti-cratering agents, fillers, sedimentation inhibitors, UV absorbers, antioxidants and the like introduced at any stage of the production process or subsequently. It is possible, but not necessary, to include antimony oxide in the solutions to further enhance the fire retardant properties.

The solutions of this invention may also be used in non-coating applications such as in adhesive, cast thin or thick films, etc.

As noted above it has been found that coatings prepared from the compositions of the present invention have superior consistent fire retardancy combined with high tensile strength. It has also surprisingly been found that textile or fabric saturated with the polyurethane of this invention provides not only flame retardancy but exceptionally good fray resistance and washability without using an external crosslinking agent. When this polyurethane is applied on vinyl as a protective topcoat it surprisingly maintains its color lightfastness.

In order to describe the present invention so that it may be more clearly understood, the following examples are set forth. These examples are set forth primarily for the purpose of illustration, and any specific enumeration of detail contained therein should not be interpreted as a limitation on the concept of this invention.

In evaluating the coatings produced herein, the following standard tests were employed.

The fire retardancy of the coatings was measured in accordance with the AATCC Test Method 34-1969.

Tensile strength was measured in accordance with ASTM D882.

Percent elongation was measured by ASTM D882.

Percent modulus was measured by ASTM D882.

All components in the compositions are given in parts by weight. In order to more conveniently describe the components utilized in the examples, certain of the components are identified by their trademarks or a representative symbol. The trademarks or symbols used in the examples are identified as follows:

DMPA refers to 2,2-dimethylolpropionic acid.

TEA refers to triethylamine.

VIRCOL 82 referes to a phosphorous containing glycol flame retardant available from Mobil Oil Company.

Polycarbonate (MW = 2054) refers to polycarbonate derived from ethylene carbonate and 1,6-hexylene glycol available from Permuthane Inc. as KM 10-1122.

MDI refers to diphenylmethane-4,4'-diisocyanate.

Polycarbonate (MW = 928.8) refers to a polycarbonate derived from ethylene carbonate and 1.6-hexylene glycol available from Permuthane Inc.

Tetrabromo Bisphenol A ethylene oxide ether refers to polyoxyethylene(2) 2,2-bis-(3,5,dibromo-4-hydroxyphenyl)propane having a molecular weight of 643 and available from Emery Industries Inc. as Emery 9353A.

EXAMPLE 1

An isocyanate-terminated prepolymer was prepared from the following charge:

| INGREDIENT | Parts by Weight (g) |
|---|---|
| Polytetramethylene glycol (MW=994.6) available from DuPont as TERACOL-1000 | 92.6 |
| Tetrabromo bisphenol A ethylene oxide ether | 39.9 |
| DMF | 390.0 |
| MDI | 77.6 |

The polytetramethylene glycol, tetrabromo bisphenol A ethylene oxide ether and DMF were charged to a 1 liter, 3 neck flask equipped with a thermometer, condenser with drying tube, and a stirrer with a 3 inch blade. Provision was made for a continuous nitrogen purge during the course of the reaction. After mixing thoroughly, the MDI was added under constant stirring at a rate so as to control any exotherm to a maximum of 60°C. The mixture was then maintained at 55-60°C for one hour. This produced an isocyanate-terminated prepolymer with an isocyanate content of 2.17%, theoretical.

While stirring and maintaining the nitrogen purge, 13.7 parts DMF and 9.7 parts of 1,4-butanediol were added. The temperature was held at 55-60°C until the desired viscosity of 16,000 cps at 22°C was reached. 6.2 parts of 1-propanol was added to terminate the polymer. The product had the following physical properties:

100% Modulus 459 psi
200% Modulus 892 psi
300% Modulus 2202 psi
Tensile strength 5085 psi
Elongation 406%

EXAMPLE 2

An isocyanate-terminated prepolymer was prepared as in Example 1 from the following charge:

| INGREDIENT | Parts by Weight (g) |
|---|---|
| Polytetramethylene glycol (MW=994.6) available from DuPont as TERACOL-1000 | 190.3 |
| Tetrabromo bisphenol A ethylene oxide ether | 82.1 |
| DMF | 400.0 |
| MDI | 127.6 |

This produced an isocyanate-terminated prepolymer of theoretical isocyanate content = 2.0%.

While stirring and maintaining the nitrogen purge, 346.9 parts of toluene and 12.3 parts of 1,4-butanediol were added. The temperature was held at 55-60°C until a viscosity of 7,000 cps at 27°C was reached. This product had the following physical properties:

100% Modulus 1050 psi
200% Modulus 2572 psi
Tensile strength 4946 psi
Elongation 285%

Films of this product were self extinguishing in accordance with the AATCC Test Method 34-1969.

EXAMPLE 3

An isocyanate-terminated prepolymer was prepared as in Example 1 from the following charge:

| INGREDIENT | Parts by Weight (g) |
|---|---|
| Polytetramethylene glycol (MW=1996.4) available from DuPont as TERACOL-2000 | 171.5 |
| Tetrabromo bisphenol A ethylene oxide ether | 36.8 |
| DMF | 520.1 |
| MDI | 71.6 |

This produced an isocyanate-terminated prepolymer of theoretical isocyanate content = 1.5%.

While stirring and maintaining the nitrogen purge, 10.1 parts of DMF and 5.81 parts of 1,4-butanediol were added. The temperature was held at 55-60°C until a viscosity of 33,000 cps at 26°C was reached. 4.9 parts of 1-propanol was then added to stop the polymerization. This product had the following physical properties:

100% Modulus 340 psi
200% Modulus 490 psi
300% Modulus 615 psi
Tensile strength 4050 psi
Elongation 945%

EXAMPLE 4

An isocyanate-terminated prepolymer was prepared as in Example 1 from the following charge:

| INGREDIENT | Parts by Weight (g) |
|---|---|
| Hexanediol-neopentylglycol adipate (MW=994.6) available from Hooker Chemicals as RUCO S1015-120 | 123.3 |
| Tetrabromo bisphenol A ethylene oxide ether | 53.2 |
| DMF | 519.9 |
| MDI | 103.4 |

This produced an isocyanate-terminated prepolymer of theoretical isocyanate content = 2.17%.

While stirring and maintaining the nitrogen purge, 18.7 parts of DMF and 10.2 parts of 1,4-butanediol were added. The temperature was held at 55-60°C until a viscosity of 10,000 cps at 54°C was reached. 16.9 parts of 1-propanol was added to terminate the polymer. This product had the following physical properties.

| | |
|---|---|
| 100% Modulus | 525 psi |
| 200% Modulus | 770 psi |
| 300% Modulus | 1185 psi |
| Tensile strength | 1875 psi |
| Elongation | 460% |

EXAMPLE 5

An isocyanate-terminated prepolymer was prepared as in Example 1 from the following charge:

| INGREDIENT | Parts by Weight (g) |
|---|---|
| Polytetramethylene glycol (MW=1570.5) available from DuPont as TERETHANE | 117.5 |
| Tetrabromo bisphenol A ethylene oxide ether | 54.2 |
| Vircol 82 | 14.8 |
| DMF | 519.9 |
| MDI | 93.5 |

This produced an isocyanate-terminated prepolymer of theoretical isocyanate content = 1.96%.

While stirring and maintaining the nitrogen purge, 17.0 parts DMF and 9.5 parts 1,4-butanediol were added. The temperature was held at 55-60°C until a viscosity of 16,000 cps at 50°C was reached. 8.4 parts of 1-propanol was added to terminate the polymer.

EXAMPLE 6

An isocyanate-terminated prepolymer was prepared as in Example 1 from the following charge:

| INGREDIENT | Parts by Weight (g) |
|---|---|
| Polytetramethylene glycol (MW=1196.6) available from DuPont as TERETHANE 1000 | 117.9 |
| Tetrabromo bisphenol A ethylene oxide ether | 29.7 |
| Vircol 82 | 38.7 |
| DMF | 520.0 |
| MDI | 93.7 |

This produced an isocyanate-terminated prepolymer of theoretical isocyanate content = 1.97%.

While stirring and maintaining the nitrogen purge, 16.5 parts DMF 0.02 parts borontriflouride etherate and 9.4 parts 1,4-butanediol were added. The temperature was held at 55-60°C until a viscosity of 3500 cps at 22°C was reached. 8.4 parts of 1-propanol was then added to terminate the polymer.

EXAMPLE 7

An isocyanate terminated-prepolymer was prepared as in Example 1 from the following charge:

| INGREDIENT | Parts by Weight (g) |
|---|---|
| Polytetramethylene glycol (MW=994.6) | 176.6 |
| Tetrabromo bisphenol A ethylene oxide ether | 29.7 |
| DMF | 520.0 |
| MDI | 93.7 |

This produced an isocyanate-terminated prepolymer of theoretical isocyanate content = 1.97%.

While stirring and maintaining the nitrogen purge, 13.3 parts DMF and 8.2 parts of 1,4-butanediol were added. The temperature was held at 55-60°C until the desired viscosity of 10,000 cps at 51°C was reached. 8.3 parts of 1-propanol was added to terminate the polymer.

EXAMPLE 8

An isocyanate-terminated prepolymer was prepared from the following charge:

| INGREDIENT | Parts by Weight (g) |
|---|---|
| Polypropylene glycol (MW=1968.4) available from Union Carbide as PPG-2025 | 353.7 |
| DMPA | 10.4 |
| Tetrabromo bisphenol A ethylene oxide ether | 69.4 |
| Toluene diisocyanate | 100.0 |
| DMF | 266.4 |

The polypropylene glycol, dimethyl propionic acid, tetrabromo bisphenol A ethylene oxide ether and DMF were charged into a 1 liter, 3 neck flask equipped with a thermometer, condenser with drying tube, and a stirrer with a 3 inch blade. Provision was made for a continuous nitrogen purge during the course of the reaction. After mixing thoroughly, the toluene diisocyanate was added under constant stiring at a rate so as to control any exotherm to a maximum of 90°C. The mixture was then maintained at 85-90°C for one hour. This produced an isocyanate-terminated prepolymer with a theoretical isocyanate content of 2.26%. This gave an isocyanate analysis of 1.46%.

In a second container, with provision for constant stirring, 107.7 g of the above prepolymer, 109.5 g toluene, 76.6 g DMF were added and mixed well. Up to 3.2 g of isophorone diamine was added under constant stirring until a viscosity of 6,000 cps at 29°C was obtained. 3 g of 1-propanol was then added. The solids were 25%.

EXAMPLE 9

An isocyanate-terminated prepolymer was prepared from the following ingredients:

| INGREDIENT | Parts by Weight (g) |
|---|---|
| Butanediol adipate (MW)=1985.8) available from Hooker Chemical as S102-55 | 339.4 |
| Tetrabromo bisphenol A ethylene oxide ether | 66.0 |
| DMF | 266.4 |
| MDI | 128.2 |

The butanediol adipate, tetrabromo bisphenol A ethylene oxide ether and DMF were charged into a 1 liter, 3 neck flask equipped with a thermometer, condenser with drying tube, and stirrer with a 3 inch blade. Provision was made for a continuous nitrogen purge during the course of the reaction. After mixing thoroughly, the MDI was added under constant stirring at a rate so as to control any exotherm to a maximum of 60°C. The mixture was then maintained a 55-60°C for one hour. This produced an isocyanate-terminated prepolymer with an isocyanate content of 2.51%. This gave an isocyanate analysis of 2.18%.

In a second container, with provision for constant stirring, 130.4 g prepolymer from above, 163.6 g DMF

and up to 3 g 1,4-butanediol were added and mixed well. When a viscosity of 71,5000 cps at 26°C was reached, 3 g 1-propanol was added. The total solids content was 30%.

EXAMPLE 10

An isocyanate-terminated prepolymer was prepared from the following charge:

| INGREDIENT | Parts by Weight (g) |
|---|---|
| Polycarbonate (MW-2054) | 359.0 |
| Tetrabromo bisphenol A ethylene oxide ether | 75.1 |
| Toluene | 266.1 |
| Dicyclohexylmethane diisocyanate | 99.2 |
| Stannous octoate | 0.53 |

The polycarbonate, tetrabromo bisphenol A ethylene oxide ether, toluene and stannous octoate were charged into a 1 liter, 3 neck flask equipped with a thermometer, condenser with drying tube, and stirrer with a 3 inch blade. Provision was made for a continuous nitrogen purge during the course of the reaction. After mixing thoroughly, the dicyclohexylmethane diisocyanate was added under constant stirring at a rate so as to control any exotherm to a maximum of 105°C. The mixture was then maintained at 100-105°C for two hours. This produced an isocyanate-terminated prepolymer with a theoretical isocyanate content of 0.92%. This gave an isocyanate analysis of 0.75%.

In a second container, with provision for constant stirring, 104.3 g of the above prepolymer, 4.0 g of dicyclohexylmethane diisocyanate, 72.5 g of DMF and 36.2 g of diethyleneglycol monomethyl ether were added and mixed well. Up to 4.2 g isophorone diamine was added under constant stirring until a viscosity of 7,000 cps at 38°C was reached. 36.2 g of 1-propanol was then added. The total solids content were 30%.

EXAMPLE 11

An isocyanate-terminated prepolymer was prepared as in Example 10 from the following charge:

| INGREDIENT | Parts by Weight (g) |
|---|---|
| Polycarbonate (MW=928.8) | 240.0 |
| Tetrabromo bisphenol A ethylene oxide ether | 55.4 |
| Toluene | 324.0 |
| Dicyclohexylmethane diisocyanate | 180.5 |
| Stannous octoate | 0.13 |

This produced an isocyanate-terminated prepolymer with a theoretical isocyanate content of 3.65%. The actual isocyanate analysis was 3.28%.

In a second container, with provision for constant stirring, 121.4 g of the above prepolymer, 41.4 g toluene, 90 g 1-propanol and 45.0 g ethyleneglycol monomethyl ether were added and mixed. Up to 2.1 g of 64% hydrazine in water was added to reach a viscosity of 1600 cps at 38°C. The total solids content was

25%.

EXAMPLE 12

An isocyanate-terminated prepolymer was prepared from the following charge:

| INGREDIENT | Parts by Weight (g) |
|---|---|
| Hexanediol neopentylglycol adipate (MW=915.2) available from Hooker Chemicals as RUCO S1015-120 | 277.3 |
| Tetrabromo bisphenol A ethylene oxide ether | 55.0 |
| Toluene | 264.0 |
| Dicyclohexylmethane diisocyanate | 203.6 |
| Stannous octoate | 0.11 |

The hexanediol neopentylglycol adipate, tetrabromo bisphenol A ethylene oxide ether, toluene and stannous octoate were charged into a 1 liter, 3 neck flask equipped with a thermometer, condenser with drying tube, and stirrer with a 3 inch blade. Provision was made for a continuous nitrogen purge during the course of the reaction. After mixing thoroughly, the dicyclohexylmethane diisocyanate was added under constant stirring at a rate so as to control any exotherm to 105°C maximum. The mixture was then maintained at 100-105°C for two hours. This produced an isocyanate-terminated prepolymer with a theoretical isocyanate content of 4.08% and analysis of 2.84%.

In the second container, with provision for constant stirring, 109.2 g of the above prepolymer, 75.4 g toluene, 106.8 g of isopropanol and up to 5.9 g of 64% hydrazine in water were added and mixed to obtain a vis cosity of 17,700 cps at 25°C. The total content was 25%.

EXAMPLE 13

An isocyanate-terminated prepolymer was prepared as in Example 1 from the following charge:

| INGREDIENT | Parts by Weight (g) |
|---|---|
| Polytetramethylene glycol (MW=2047.4) available from DuPont as TERETHANE 2000 | 238.0 |
| Tetrabromo bisphenol A ethylene oxide ether | 74.8 |
| DMF | 400.0 |
| MDI | 87.2 |

This produced an isocyanate-terminated prepolymer with a theoretical isocyanate content of 1.22% and analysis of 0.91%.

In a second container, with provision for constant stirring, 206.0 g of the above prepolymer, 89 g toluene and up to 2 g 1,4-butanediol were added and mixed. When a viscosity of 10,200 cps at 53°C was reached, 3.0 g 1-propanol was added. The total solids content was 35%. The physical properties were:

100% Modulus 254 psi
200% Modulus 288 psi
300% Modulus 327 psi
Tensile strength 3167 psi
Elongation 720%

EXAMPLE 14

An isocyanate-terminated prepolymer was prepared from the following charge:

| INGREDIENT | Parts by Weight (g) |
|---|---|
| Hexanediol neopentylglycol adipate (MW=3040.6) available from Hooker Chemicals as RUCO S1015-35 | 340.5 |
| Tetrabromo bisphenol A ethylene oxide ether | 72.0 |
| 1.4-butanediol | 16.1 |
| DMF | 200.0 |
| MDI | 171.3 |

The hexanediol neopentylglycol adipate, tetrabromo bisphenol A ethylene oxide ether, 1,4-butanediol and DMF were charged to a 1 liter, 3 neck flask equipped with a thermometer, condenser with drying tube, and stirrer with a 3 inch blade. Provision was made for a continuous nitrogen purge during the course of the reaction. After mixing thoroughly, the MDI was added under constant stirring at a rate so as to control any exotherm to 60°C maximum. The mixture was then maintained at 55-60°C for one hour. This produced an isocyanate-terminated prepolymer with a theoretical isocyanate content of 2.96% and analysis of 1.7%.

In a second container, with provision for constant stirring, 135.5 g of the above prepolymer, 67.7 g DMF, 92.5 g toluene and up to 3.4 g 1,4-butanediol were added and mixed. When the viscosity of 13,000 cps at 54°C was reached, 0.9 g 1-propanol was added. The total solids content was 35%. The physical properties were:
100% Modulus 550 psi
200% Modulus 970 psi
300% Modulus 1902 psi
Tensile strength 6737 psi
Elongation 510%

EXAMPLE 15

An isocyanate-terminated prepolymer was prepared as in Example 14 from the following charge:

| INGREDIENT | Parts by Weight (g) |
|---|---|
| Hexanediol neopentylglycol adipate (MW=3040.6) | 391.4 |
| Tetrabromo bisphenol A ethylene oxide ether | 33.1 |
| 1,4-butanediol | 5.8 |
| DMF | 302.1 |
| MDI | 67.6 |

This produced an isocyanate-terminated prepolymer with a theoretical isocyanate content of 1.25% and analysis of 1.01%.

In a second container, with provision for constant stirring, 205.5 g of the above prepolymer, 89.2 g toluene and up to 2.2 g 1,4-butanediol were added and mixed. When the viscosity of 39,000 cps was reached, 3.0 g 1-propanol was added. The total solids content was 35%. The physical properties were:

100% Modulus 299 psi
200% Modulus 381 psi
300% Modulus 474 psi
Tensile strength 2375 psi
Elongation 815%

EXAMPLE 16

An isocyanate-terminated prepolymer was prepared from the following charge:

| INGREDIENT | Parts by Weight (g) |
|---|---|
| Polycarbonate (MW=2054) | 380.4 |
| DMPA | 9.3 |
| Tetrabromo bisphenol A ethylene oxide ether | 59.5 |
| Toluene | 133.0 |
| DMF | 132.9 |
| Isophorone diisocyanate | 84.6 |
| Stannous octoate | 0.27 |

The polycarbonate, tetrabromo bisphenol A ethylene oxide ether, dimethylpropionic acid, toluene, DMF and stannous octoate were charged to a 1 liter, 3 neck flask equipped with a thermometer, condenser with drying tube, and stirrer with a 3 inch blade. Provision was made for a continuous nitrogen purge during the course of the reaction. After mixing thoroughly, the isophorone diisocyanate was added under constant stirring at a rate so as to control any exotherm to 85°C maximum. The mixture was then maintained at 80-85°C for two hours. This produced an isocyanate-terminated prepolymer with a theoretical isocyanate content of 0.36%.

In a second container, with provision for constant stirring, 176.8 g of the above prepolymer, 3.1 g triethylamine, 27.9 g toluene, 30.3 g DMF, 57.7 g isopropanol and 3.1 g of isophorone diamine (50% solution in isopropanol) were added and mixed. When a viscosity of 16,000 cps at 22°C was reached, 0.5 g dibutylamine was added. The total solids content was 40%. The physical properties were:

100% Modulus 162 psi
200% Modulus 189 psi
300% Modulus 220 psi
Tensile strength 1813 psi
Elongation 810%

## Claims

1. A polyurethane solution comprising

I. 70 to 10% by weight of the reaction product of

A. an NCO-terminated prepolymer comprising

(i) 3 to 30% by weight of the prepolymer of a halogen containing diol selected from the group consisting of alkoxylated halogen-containing Bisphenol A diols and halogen-containing neopentyl glycols;

(ii) 0 to 50% by weight of either a carboxy group containing diol or a diol selected from the group consisting of ethylene glycol, propylene -1,2-glycol, propylene-1,3-glycol, butylene-1,4-glycol, butylene -2,3-glycol, hexane-1,6-diol, octane-1,8-diol, nonane-1,9-diol, decane-1,10-diol, neopentylglycol, cyclohexanedimethanol and 2-methyl-propane-1,3-diol;

(iii) 10 to 80% by weight of a polyol, selected from the group consisting of polyesters, polylactones, polyacetals, polycarbonates, polyolefins, polyethers, polythioethers and mixtures or combined polymers thereof having a molecular weight of from about 300 to about 4200; and

(iv). 10 to 35% by weight of an organic diisocyanate,

B. An active hydrogen containing chain extender having at least two active hydrogen groups which can react with the NCO groups,

C. A monofunctional active hydrogen containing chain terminator, and

II. 30 to 90% by weight of at least one organic solvent.

2. A solution as claimed in Claim 1, wherein said chain terminator is selected from the group consisting of $C_{1-12}$ straight chain or branched alcohols, thiols, amines, oximes and aminoalcohols.

3. A solution as claimed in Claim 1, wherein the halogen containing diol is a Bisphenol A diol of the formula:

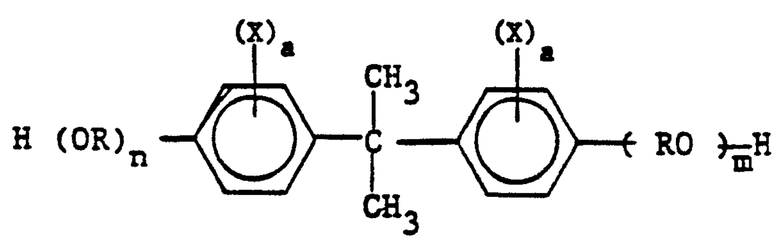

wherein
X is bromine or chlorine;
a is an integer from 1 to 4;
R is an alkylene group containing from 2 to 4 carbon atoms; and
n and m are integers from 1 to 10.

4. A solution as claimed in Claim 1, wherein the carboxy group containing diol is 2,2-dimethylolpropionic acid.

5. A solution as claimed in any one of Claims 1 to 4, wherein said solvent is selected from the group consisting of alcohols, aromatic hydrocarbons, carbonates, esters, ketones, N-alkyl pyrrolidones and dimethyl formamide.

6. An NCO-terminated prepolymer comprising

A. 3 to 30% by weight of the prepolymer of a halogen containing diol selected from the group consisting of alkoxylated halogen containing Bisphenol A diols and halogen containing neopentyl glycols,

B. 0 to 50% by weight of a diol selected from the group consisting of ethylene glycol, propylene -1,3-glycol, propylene-1, 2-glycol, butylene-1,4-glycol, butylene -2,3-glycol, hexane-1,6-diol, octane-1,8-diol, nonane-1,9-diol, decane-1,10-diol, neopentylglycol, cyclohexanedimethanol and 2-methyl-propane-1,3-diol,

C. 10 to 80% by weight of a polyol selected from the group consisting of polyesters, polylactones, polyacetals, polycarbonates, polyolefins, polyethers, polythioethers and mixtures or combined polymers thereof having a molecular weight of from about 300 to about 4200; and

D. 10 to 35% by weight of an organic diisocyanate.

7. A method of preparing a polyurethane solution containing an organic solvent, said method comprising

A. preparing an isocyanate terminated prepolymer by reacting

(i) 3 to 30% by weight of the prepolymer of a halogen containing diol selected from the group consisting of alkoxylated halogen containing Bisphenol A diols and halogen containing neopentyl glycols;

(ii) 0 to 50% by weight of either a carboxy group containing diol or a diol selected from the group consisting of ethylene glycol, propylene-1,2-glycol, propylene-1,2-glycol, butylene-1,4-glycol, butylene -2,3-glycol, hexane-1,6-diol, octane-1,8-diol, nonane-1,9-diol, decane-1,10-diol, neopentylglycol, cyclohexanedimethanol and 2-methyl-propane-1,3-diol;

(iii) 10 to 80% by weight of a polyol selected from the group consisting of polyesters, polylactones, polyacetals, polycarbonates, polyolefins, polyethers, polythioethers and mixtures or combined polymers thereof having a molecular weight of from about 300 to about 4200; and

(iv) 10 to 35% by weight of an organic diisocyanate,

either neat or in the presence of a first organic solvent,

(B) reacting the isocyanate terminated prepolymer with an active hydrogen containing chain extender having at least two active hydrogen groups which can react with the NCO groups in the presence of a second organic solvent, and

(C) terminating the reaction with a monofunctional active hydrogen containing chain terminator.

8. A method as claimed in Claim 7, wherein the first organic solvent is DMF, toluene or xylene and the second organic solvent is selected from the group consisting of acetone, methylethylketone, dimethylformamide, dimethylacetamide, ethylene carbonate, propylene carbonate, N-methylpyrrolidone, ethyl acetate, ethylene glycol acetate, propylene glycol acetate, toluene, and xylene.

9. A method as claimed in Claim 7, wherein said diisocyanate is aliphatic or cycloaliphatic and said second organic solvent is a 10:90 to 90:10 by weight mixture of aromatic hydrocarbon:alcohol.

10. A method as claimed in Claim 7, wherein said diisocyanate contains at least one aromatic ring and said second organic solvent is a 100:0 to 0:100 by weight mixture of toluene:DMF.